(19) Europäisches Patentamt
European Patent Office
Office européen des brevets

(11) **EP 2 275 647 A2**

(12) **EUROPÄISCHE PATENTANMELDUNG**

(43) Veröffentlichungstag:
**19.01.2011 Patentblatt 2011/03**

(51) Int Cl.:
***F01D 9/02*** *(2006.01)*

(21) Anmeldenummer: **10005516.9**

(22) Anmeldetag: **27.05.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **17.07.2009 DE 102009033591**

(71) Anmelder: **Rolls-Royce Deutschland Ltd & Co KG 15827 Blankenfelde-Mahlow (DE)**

(72) Erfinder: **Gümmer, Volker, Dr.**
**15831 Mahlow (DE)**

(74) Vertreter: **Weber, Joachim**
**Hoefer & Partner**
**Patentanwälte**
**Pilgersheimer Strasse 20**
**81543 München (DE)**

(54) **Strömungsarbeitsmaschine mit Schaufelreihengruppe**

(57) Die Erfindung bezieht sich auf eine Strömungsarbeitsmaschine mit einem durch eine rotierende Welle (2) und ein Gehäuse (1) gebildeten Hauptströmungspfad, in dem zumindest eine Anordnung rotierender, einen Rotor bildender und dem Fluid Energie zuführender Schaufeln vorgesehen ist und in dem in Hauptströmungsrichtung benachbart zum Rotor eine Anordnung ruhender, einen Stator bildender Schaufeln vorgesehen ist, wobei die Rotorschaufeln an einer rotierenden Welle (2) befestigt sind und zumindest eine der Anordnungen des Rotors und des Stators durch eine Schaufelreihengruppe gebildet wird, wobei die zumindest eine Schaufelreihengruppe aus mehreren in Hauptströmungsrichtung benachbart angeordneten Rotorschaufelreihen oder Statorschaufelreihen selben Typs als Mitgliedsschaufelreihen besteht, wobei der Flächenquerschnittverlauf des Hauptströmungspfades in mindestens einer eine Rotoranordnung und eine Statoranordnung umfassenden Stufe zu einem überhöhten Rotor-Stator-Einschnürungsverhältnis QRS führt, welches folgender Beziehung genügt:

$$[0{,}2 + (KT - 0{,}45)^{0{,}1}] < QRS$$

wobei QRS nach folgender Formel definiert ist:

$$QRS = KR\,/\,KS$$

wobei KT die Gesamtstufeneinschnürung ist. QRS und KT sind wie folgt bestimmt:

$$QRS = KR\,/\,KS \text{ mit } KR = ARI\,/\,ARA$$
$$\text{und } KS = ASI\,/\,ASA$$
$$KT = ARI\,/\,ASA$$

wobei ARI, ARA, ASI und ASA sich wie folgt berechnen:

EP 2 275 647 A2

$$ARI = \pi \, (R_2^2 - R_1^2)$$

$$ARA = \pi \, (R_4^2 - R_3^2)$$

$$ASI = \pi \, (R_6^2 - R_5^2)$$

$$ASA = \pi \, (R_8^2 - R_7^2)$$

**Fig. 1**

**Beschreibung**

Die Erfindung bezieht sich auf eine Strömungsarbeitsmaschine mit einem durch eine Nabe und ein Gehäuse gebildeten Hauptströmungspfad, in dem zumindest eine Anordnung rotierender, dem Fluid Energie zuführender Schaufeln (genannt Rotor) vorgesehen ist und in dem benachbart zum Rotor eine Anordnung ruhender Schaufeln (genannt Stator) vorgesehen ist, wobei die Rotorschaufeln an einer rotierenden Welle befestigt ist und wenigstens der Rotor oder der Stator erfindungsgemäß durch eine Schaufelreihengruppe, das heißt eine Gruppe mehrerer, in Hauptströmungsrichtung direkt benachbarter Schaufelreihen selben Typs, Rotor- oder Statorschaufelreihe, gebildet wird.

Die aerodynamische Belastung von Strömungsarbeitsmaschinen, wie etwa Bläsern, Verdichtern, Pumpen und Ventilatoren, die sowohl mit gasförmigem als auch mit flüssigem Medium betrieben werden können, ist durch das Wachstum und die Ablösung von Grenzschichten auf den Schaufeln sowie auf den Naben-und Gehäusewänden bestimmt. Üblicherweise erhält man ein gutes Betriebsverhalten, wenn die aerodynamische Belastung gleichmäßig auf die Rotorbeschaufelung und die Statorbeschaufelung verteilt wird, beispielsweise bei einer Bläser- oder Verdichterstufe. Dabei fällt auch die Einschnürung des Hauptströmungspfades (Ringkanal), d. h. die Abnahme der Strömungspfadquerschnittsfläche in Strömungsrichtung, die bei kompressiblem Arbeitsmedium zwischen der Eintritts- und der Austrittsebene einer Stufe erforderlich ist, am Rotor und Stator ähnlich aus. Dabei ergeben sich leichte Unterschiede der Einschnürung am Rotor und am Stator je nach gewähltem Reaktionsgrad der Stufe.

Der Stand der Technik zeigt Konstruktionen, bei welchen sich die innere und die äußere Hauptströmungskontur, beispielsweise von Bläsern und Verdichtern, kontinuierlich annähern und dabei einen konischen Verlauf ohne Unebenheiten aufweisen.

Aus dem Stand der Technik bekannte Verläufe des Hauptströmungspfades zeigen einen kontinuierlich konischen Verlauf, andere Anordnungen nach dem Stand der Technik beziehen sich auf Strömungsarbeitsmaschinen mit einer im Vergleich zum Stator hohen Einschnürung am Rotor, wobei die Stufe durch jeweils nur eine einzige Rotor- und Statorschaufelreihe gebildet wird.

Der Erfindung liegt die Aufgabe zu Grunde, eine Strömungsarbeitsmaschine mit Schaufelreihengruppe der eingangs genannten Art zu schaffen, welche bei betriebssicherer Wirkungsweise eine aerodynamische Entlastung des Rotors, gegebenenfalls der Rotorschaufelreihengruppe, aufweist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit ein Verlauf des Hauptströmungspfades vorgesehen, dessen Flächenquerschnitt in mindestens einer ihrer Stufen, bestehend aus einem Rotor und einem Stator, und wenigstens Rotor oder Stator bestehend aus einer Schaufelreihengruppe, zu einem Rotor-Stator-Einschnürungsverhältnis QRS führen, welches folgender Glei-chung genügt:

$$[0,2 + (KT - 0,45)^{0,1}] < QRS$$

wobei KT die Gesamtstufeneinschnürung ist. QRS und KT werden wie folgt berechnet:

$$QRS = KR \, / \, KS \text{ mit } KR = ARI \, / \, ARA$$

$$KS = ASI \, / \, ASA$$

$$KT = ARI \, / \, ASA$$

wobei ARI, ARA, ASI und ASA sich wie folgt berechnen:

$$ARI = \pi (R_2{}^2 - R_1{}^2)$$

$$ARA = \pi (R_4{}^2 - R_3{}^2)$$

$$ASI = \pi (R_6{}^2 - R_5{}^2)$$

$$ASA = \pi (R_8{}^2 - R_7{}^2)$$

wobei in Durchströmungsrichtung der Strömungsarbeitsmaschine

$R_1$     der Radius am radial innersten Punkt der Vorderkante der am weitesten stromauf befindlichen Schaufelreihe des Rotors,

$R_2$     der Radius am radial äußersten Punkt der Vorderkante der am weitesten stromauf befindlichen Schaufelreihe des Rotors,

$R_3$     der Radius am radial innersten Punkt der Hinterkante der am weitesten stromab befindlichen Schaufelreihe des Rotors,

$R_4$     der Radius am radial äußersten Punkt der Hinterkante der am weitesten stromab befindlichen Schaufelreihe des Rotors,

$R_5$     der Radius am radial innersten Punkt der Vorderkante der am weitesten stromauf befindlichen Schaufelreihe des Stators,

$R_6$     der Radius am radial äußersten Punkt der Vorderkante der am weitesten stromauf befindlichen Schaufelreihe des Stators,

$R_7$     der Radius am radial innersten Punkt der Hinterkante der am weitesten stromab befindlichen Schaufelreihe des Stators.

$R_8$     der Radius am radial äußersten Punkt der Hinterkante der am weitesten stromab befindlichen Schaufelreihe des Stators

Die vorliegende Erfindung zeichnet sich durch eine Reihe erheblicher Vorteile aus.

Erfindungsgemäß bezieht sich die Erfindung auf eine Strömungsarbeitsmaschine sowohl für gasförmiges als auch für flüssiges Arbeitsmedium in axialer oder halbaxialer Bauart.

Die erfindungsgemäße Lösung ist sowohl bei Strömungsarbeitsmaschinen mit nur einer aus Rotor und Stator gebildeten Stufe als auch mit mehreren, jeweils aus Rotor und Stator bestehenden Stufen einsetzbar.

Es versteht sich, dass, wie auch aus dem Stand der Technik bekannt, der Rotor aus einer Anzahl von Schaufeln aufgebaut ist, die mit der rotierenden Welle der Strömungsarbeitsmaschine verbunden sind und dem Arbeitsmedium Energie zuführen. Der Stator befindet sich stromab des Rotors und besteht aus einer Anzahl ruhender Schaufeln, deren Enden entweder mit einem Deckband oder mit freiem Schaufelende ausgeführt sein können. Sowohl der Rotor als auch der Stator sind in einem Gehäuse angeordnet.

Weiterhin kann die Strömungsarbeitsmaschine in der erfindungsgemäßen Ausgestaltung vor dem ersten Rotor einen Stator aufweisen (Vorleitrad). Die Rotorschaufeln und die Statorschaufeln können drehbar ausgebildet sein, so dass diese von außerhalb des Hauptströmungspfades, beispielsweise mittels einer Spindel, einstellbar sind.

Bei der erfindungsgemäßen Lösungsmöglichkeit ist es günstig, wenn der Stator wenigstens einer Stufe der Strömungsarbeitsmaschine als Hochauftriebskonfiguration ausgeführt ist. Es ist dann von Vorteil, wenn die einzelnen Stufen dieser Strömungsarbeitsmaschine mit einem Verlauf des Hauptströmungspfades versehen werden, der eine signifikante Erhöhung der Einschnürung über den Rotor hinweg verbunden mit einer verringerten Einschnürung über den Stator hinweg erlaubt. Demgemäß ist es sinnvoll, abweichend vom Stand der Technik, eine sichtliche Überhöhung des Rotor-Stator-Einschnürungsverhältnisses an mindestens einer eine Schaufelreihengruppe enthaltende Stufe der Strömungsarbeitsmaschine vorzusehen. Betrachtet man eine Stufe einer mehrstufigen Strömungsarbeitsmaschine, so ist die Einschnürung am Rotor der Stufe vergleichsweise hoch, die am Stator der selben Stufe sehr viel geringer. Dieser Umstand lässt sich durch das erfindungsgemäß angegebene Einschnürungsverhältnis QRS zwischen Rotor und Stator quantifizieren.

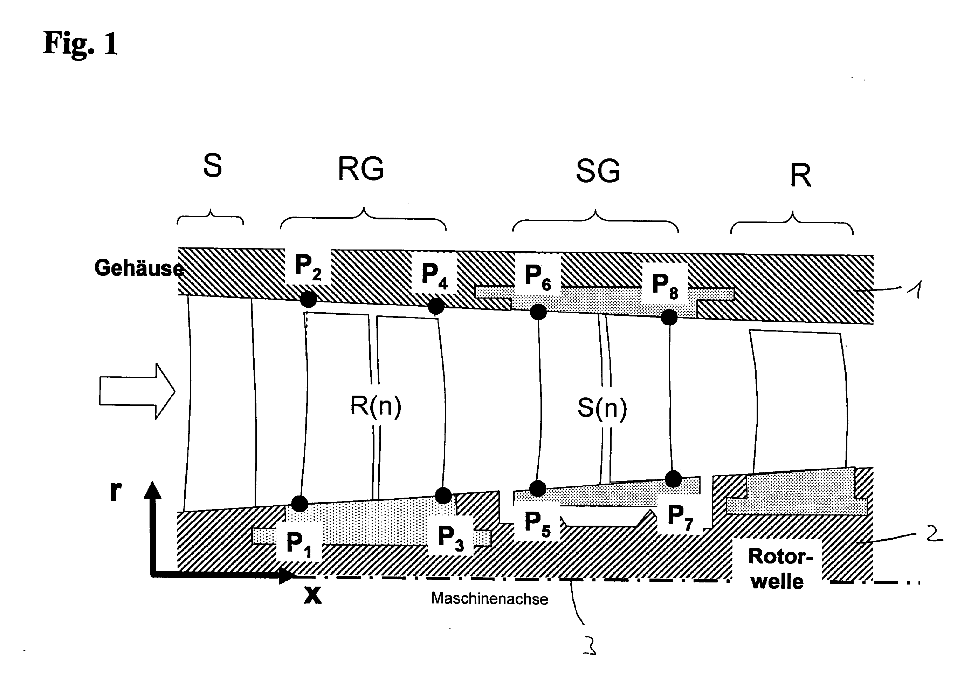

Zur Verdeutlichung der Erfindung zeigt die Fig. 1 einen Ausschnitt einer mehrstufigen Strömungsarbeitsmaschine mit der Definition der Hauptströmungspfadquerschnittsflächen.

In Fig. 1 ist die n-te Stufe einer mehrstufigen Maschine gezeigt. Die vier Eckpunkte des Rotors R(n) und des Stators S(n) sind besonders markiert. Sowohl der Rotor als auch der Stator bestehen hier beispielhaft aus einer Schaufelreihengruppe RG bzw. SG, hier dargestellt mit jeweils zwei Mitgliedsschaufelreihen. Erfindungsgemäß sind aber sowohl am Rotor als auch am Stator mehr als zwei Mitgliedsschaufelreihen ebenfalls vorsehbar. Wenigstens eine Stufe der Strömungsarbeitsmaschine muss erfindungsgemäß mindestens eine Schaufelreihengruppe am Rotor oder Stator umfassen, sodass folgende erfindungsgemäße Konfigurationen möglich sind:

1.) Rotor mit konventionell einreihiger Bauweise, gefolgt von einem Stator mit Schaufelreihengruppe,
2.) Rotor mit Schaufelreihengruppe, gefolgt von einem Stator mit konventionell einreihiger Bauweise,
3.) Rotor mit Schaufelreihengruppe, gefolgt von einem Stator mit Schaufelreihengruppe.

Die Eckpunkte $P_1$ bis $P_8$ werden durch die Schnittpunkte der Vorder- und Hinterkanten (bzw. deren hauptströmungspfadrandorthogonalen Verlängerung bei Rotor- oder Statorschaufelenden mit Spalt) und dem Gehäuse bzw. der Nabe festgelegt. Verläuft die Naben- oder Gehäusekontur in Umfangsrichtung nicht bei konstantem Radius, so kommt der in Umfangsrichtung arithmetisch gemittelte Radius zum Tragen. Der Rotor R(n) besitzt die Punkte $P_1$ bis $P_4$, der Stator S(n) die Punkte $P_5$ bis $P_8$ . Jeder Punkt P(i) hat die axiale Position X(i) und den Radius R(i). Das Koordinatenbezugssystem liegt auf der Maschinenachse.

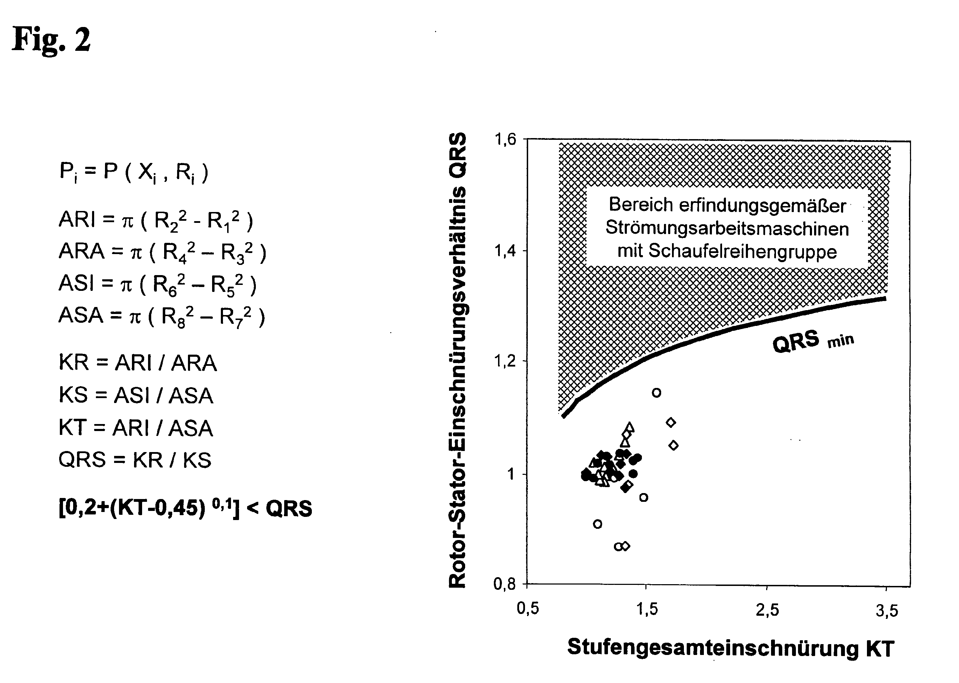

Die Fig. 2 zeigt die Formeln zur Berechnung der vier Hauptströmungspfadquerschnittsflächen ARI, ARA, ASI und ASA, welche sich aus den zugehörigen Radien berechnen lassen. Die Rotoreinschnürung ergibt sich dann aus KR = ARI / ARA, während die Statoreinschnürung sich aus KS = ASI / ASA berechnet.

Das Einschnürungsverhältnis zwischen Rotor und Stator ist dann QRS = KR / KS.

Weiterhin ist die Gesamtstufeneinschnürung KT = ARI / ASA von Bedeutung.

Die vorliegende Erfindung bezieht sich auf einen Bereich überhöhter Werte von QRS in Abhängigkeit von KT nach folgender Rechenregel:

$$[0{,}2 + (KT - 0{,}45)^{01}] < QRS$$

Der Zusammenhang gemäß oben stehender Formel ist in der rechten Hälfte der Fig. 2 graphisch dargestellt. Dabei ist ersichtlich, dass die aus dem Stand der Technik bekannten Strömungsarbeitsmaschinen sich deutlich unterhalb der Grenzlinie zu den erfindungsgemäßen Entwürfen befinden.

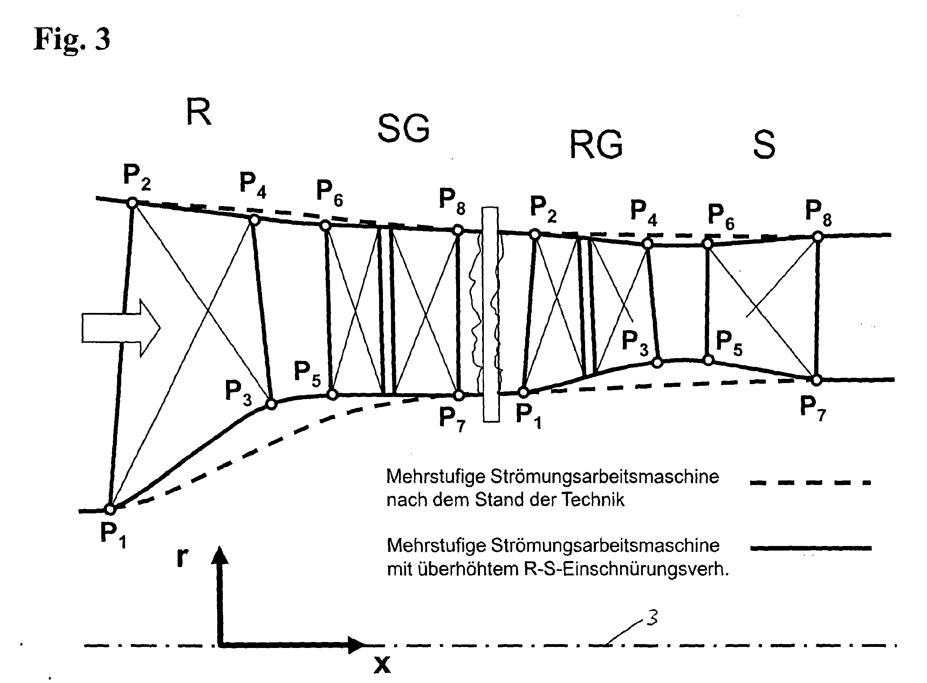

Die Fig. 3 zeigt einen beispielhaften Verlauf eines Hauptströmungspfades gemäß der vorliegenden Erfindung, verglichen mit einem nach dem Stand der Technik ausgeführten Hauptströmungspfad. Beispielhaft umfasst die erste dargestellte Stufe der Strömungsarbeitsmaschine einen einreihigen Rotor und einen Stator mit Schaufelreihengruppe während die zweite dargestellte Stufe der Maschine einen Rotor mit Schaufelreihengruppe und einen einreihigen Stator umfasst. Die Durchströmung der Maschine erfolgt stets von links nach rechts, wie durch den dicken Pfeil dargestellt. Die für die Definition des Rotor-Stator-Einschnürungsverhältnisses QRS notwendigen Eckpunkte der Rotor- und Statoranordnungen einer jeweiligen Stufe sind in Übereinstimmung mit Fig. 1 in beiden dargestellten Stufen mit $P_1$, $P_2$, $P_3$, $P_4$, $P_5$, $P_6$, $P_7$ und $P_8$ markiert.

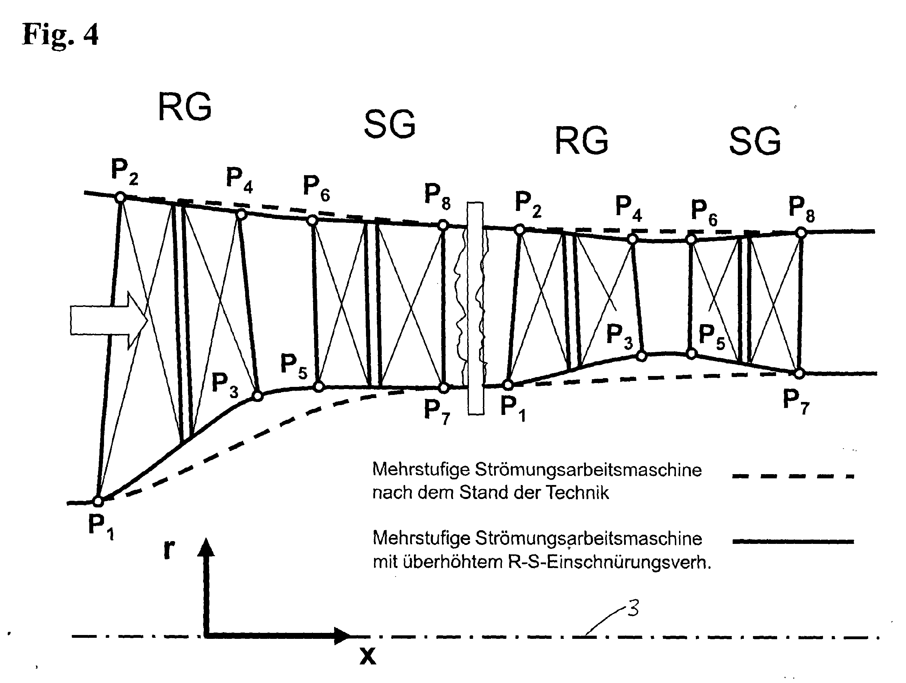

Die Fig. 4 zeigt das Beispiel einer erfindungsgemäßen Strömungsarbeitsmaschine mit Schaufelreihengruppe am Rotor und Schaufelreihengruppe am Stator in beiden dargestellten Stufen. Auch hier sind die für die Definition des Rotor-Stator-Einschnürungsverhältnisses QRS notwendigen Eckpunkte der Rotor- und Statoranordnungen einer Stufe in beiden dargestellten Stufen mit $P_1$, $P_2$, $P_3$, $P_4$, $P_5$, $P_6$, $P_7$ und $P_8$ markiert.

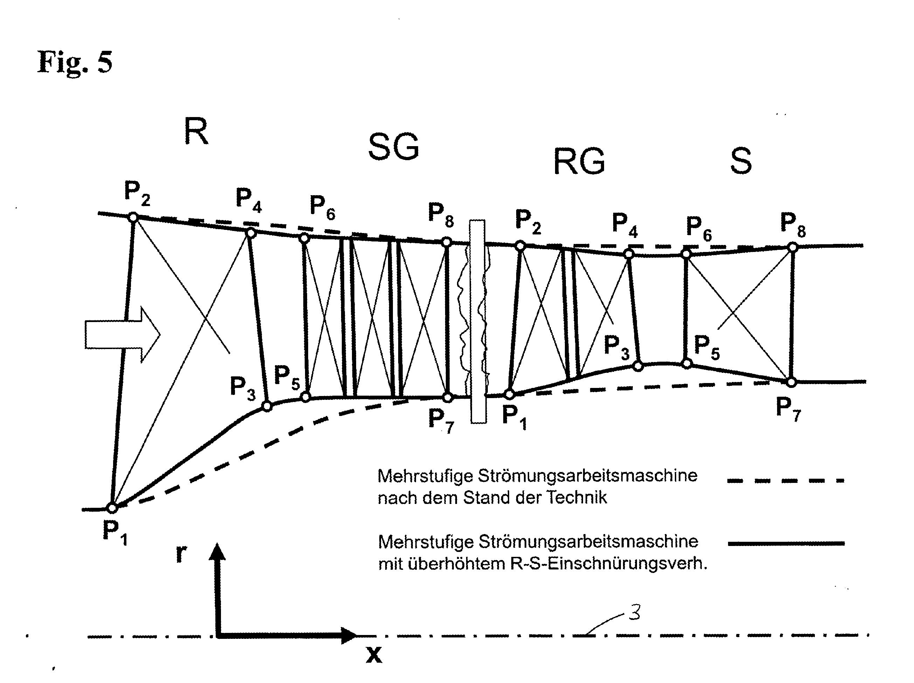

Die Fig. 5 zeigt ebenfalls eine mehrstufige Strömungsarbeitsmaschine, dargestellt sind zwei ausgewählte Stufen. Die erste Stufe umfasst einen einreihigen Rotor und eine Schaufelreihengruppe mit drei Mitgliedschaufelreihen am Stator. Die zweite Stufe zeigt eine Schaufelreihengruppe mit zwei Mitgliedschaufelreihen am Rotor und einen einreihigen Stator. Die Anzahl der Mitgliedschaufelreihen von drei beziehungsweise zwei ist hier beispielhaft und kann erfindungsgemäß auch größer sein. Auch hier sind die für die Definition des Rotor-Stator-Einschnürungsverhältnisses QRS notwendigen Eckpunkte der Rotor- und Statoranordnungen einer Stufe in beiden dargestellten Stufen mit $P_1$, $P_2$, $P_3$, $P_4$, $P_5$, $P_6$, $P_7$ und $P_8$ markiert.

Die zur Bestimmung der relevanten Flächen erfindungsgemäß heranzuziehenden Eckpunkte des Rotors und Stators der Stufen sind in den Figuren 3, 4 und 5 mit einem kleinen Kreis besonders markiert.

Ausgehend vom Stand der Technik kann erfindungsgemäß das QRS-Kriterium durch alleinige Formgebung der Nabenkontur, durch alleinige Formgebung der Gehäusekontur oder durch eine Kombination von Formgebungen der Naben- und der Gehäusekontur erfüllt werden.

Erfindungsgemäß besonders günstig ist es, wenn wie in den Figuren 1, 3, 4 und 5 dargestellt, einer Stufe mit Schaufelreihengruppe und überhöhtem Rot-Stator-Einschnürungsverhältnis mindestens eine weitere, direkt benachbarte Stufe stromab vorgesehen ist und es sich demzufolge um einen Mehrstufenverband handelt. Weiterhin erfindungsgemäß günstig ist die Vorsehung des überhöhten Einschnürungsverhältnisses in mehr als einer Stufe mit Schaufelreihengruppe, idealerweise in direkt benachbarten Stufen.

Es versteht sich, dass die Fig. 3, Fig. 4 und Fig. 5 nur eine vereinfachte Darstellung wählen. Es ist erfindungsgemäß auch möglich, abweichend von der dortigen Darstellung, die Rotoreintritts- und Statoraustrittspunkte ebenfalls zu verändern.

Aus dem Vergleich mit dem Stand der Technik ergibt sich, dass die bekannten Verläufe des Hauptströmungspfades nicht die Verwendung stark unterschiedlicher Einschnürungen (Flächenverhältnisse) in Stufen mit Schaufelreihengruppe umfassen. Die erfindungsgemäße Lösung ist besonders dann von großem Vorteil, wenn für den Rotor und den Stator einer Stufe unterschiedliche Entwurfsmethodiken verwendet werden. Dies kann beispielsweise der Einsatz konventionell hergebrachter Techniken am Rotor und der Einsatz von Schaufelreihengruppen am Stator sein, oder aber der Einsatz. konventionell hergebrachter Techniken am Stator und der Einsatz von Schaufelreihengruppen am Rotor.

Weiterhin von erfindungsgemäß hoher Bedeutung ist es, den Flächenverlauf durch eine Schaufelreihengruppe des Rotors oder des Stators in besonderer Weise zu gestalten.

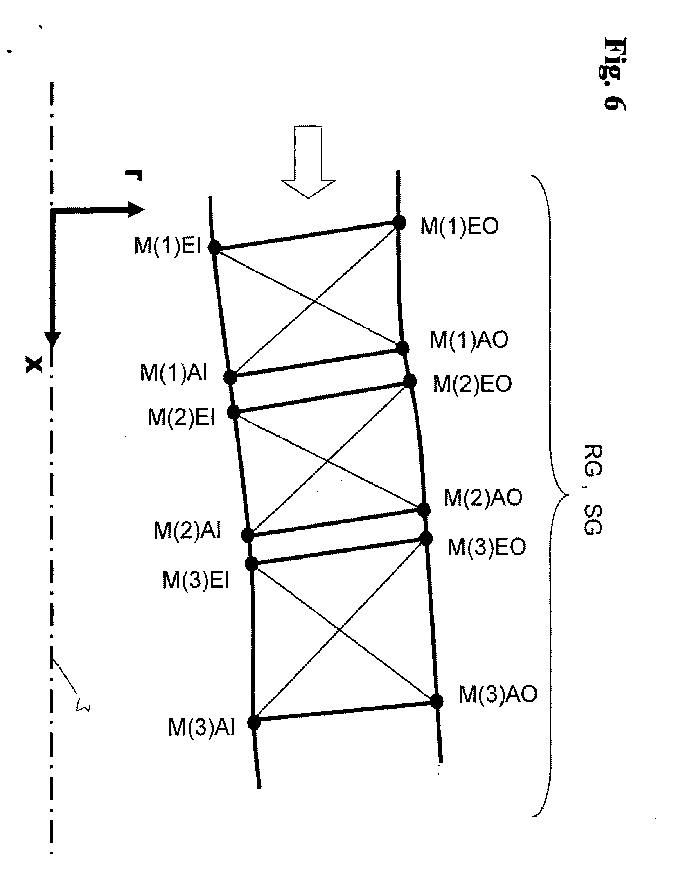

Die Fig. 6 zeigt die Schaufelreihengruppe eines Rotors oder auch eines Stators. Beispielhaft besitzt die dargestellte Schaufelreihengruppe hier N=3 Mitgliedsschaufelreihen. So findet sich in der Nomenklatur der Eckpunkte der Mitgliedschaufelreihen ein Laufindex zwischen i=1 und i=3 wieder. M(1)EI ist zum Beispiel der innere Vorderkantenpunkt der ersten Mitgliedschaufelreihe. Handelt es sich um eine Rotorschaufelreihengruppe entsprechen die Punkte M(1)EI, M(1)EO, M(N)AI und M(N)AO den Punkten $P_1$, $P_2$, $P_3$ und $P_4$. Handelt es sich um eine Statorschaufelreihengruppe entsprechen die Punkte M(1)EI, M(1)EO, M(N)AI und M(N)AO den Punkten $P_5$, $P_6$, $P_7$ und $P_8$.

Die Durchströmung der Schaufelreihengruppe erfolgt von links nach rechts, wie durch den dicken Pfeil dargestellt. Mit den zu den Eckpunkten gehörigen Radien R lassen sich Querschnittsflächen des Hauptströmungspfades bestimmen. So gilt für die Eintrittsfläche der Mitgliedschaufelreihe i, gebildet mit den Vorderkantenpunkten M(i)EI und M(i)EO:

$$AM(i)E = \pi \left( R_{M(i)EO}{}^2 - R_{M(i)EI}{}^2 \right)$$

Für die Austrittsfläche der Mitgliedschaufelreihe i, gebildet mit den Hinterkantenpunkten M(i)AI und M(i)AO, gilt:

$$AM(i)A = \pi \left( R_{M(i)AO}{}^2 - R_{M(i)AI}{}^2 \right)$$

Die Einschnürung der Mitgliedschaufelreihe i ergibt sich zu:

$$KM(i) = AM(i)E / AM(i)A$$

Entsprechend gilt für die Querschnittsflächen und die Einschnürung der Mitgliedschaufelreihe i+1:

$$AM(i+1)E = \pi \left(R_{M(i+1)EO}^2 - R_{M(i)EI}^2\right)$$

$$AM(i+1)A = \pi \left(R_{M(i+1)AO}^2 - R_{M(i+1)AI}^2\right)$$

$$KM(i+1) = AM(i+1)E / AM(i+1)A$$

Bei der Verwendung von Schaufelreihengruppen und dem erfindungsgemäßen Entwurf der Strömungsarbeitsmaschine sinkt die Zuström-Machzahl der einzelnen Mitgliedschaufelreihen deutlich in Hauptströmungsrichtung ab, sodass es erfindungsgemäß vorteilhaft ist, wenn innerhalb wenigstens eines Schaufelreihenpaares, gebildet durch zwei unmittelbar benachbarte Schaufelreihen der Schaufelreihengruppe, die weiter stromauf angeordnete Mitgliedschaufelreihe M(i) keine deutlich kleinere Einschnürung aufweist als die weiter stromab angeordnete Mitgliedschaufelreihe M(i+1) entsprechend der folgenden Maßgabe:

$$KM(i) / KM(i+1) > 0,85$$

Erfindungsgemäß weiter vorteilhaft ist es dabei, wenn die weiter stromauf angeordnete Mitgliedschaufelreihe M(i) eine größere Einschnürung aufweist als die weiter stromab angeordnete Mitgliedschaufelreihe M(i+1) entsprechend:

$$KM(i) / KM(i+1) > 1,0$$

Hierbei ist es günstig, wenn die weiter stromauf angeordnete Mitgliedschaufelreihe M(i) eine um höchstens 25% größere Einschnürung aufweist als die weiter stromab angeordnete Mitgliedschaufelreihe M(i+1), entsprechend:

$$KM(i) / KM(i+1) < 1,25$$

Hierbei ist es besonders günstig, wenn die weiter stromauf angeordnete Mitgliedschaufelreihe M(i) eine um mindestens 2% und höchstens 12% größere Einschnürung aufweist als die weiter stromab angeordnete Mitgliedschaufelreihe M(i+1), entsprechend:

$$1,02 < KM(i) / KM(i+1) < 1,12$$

Sofern N>2 ist, ist die Lage der zwei betreffenden benachbarten Mitgliedschaufelreihen M(i) und M(i+1) innerhalb der Schaufelreihengruppe erfindungsgemäß frei.
Bei vorteilhafter Ausgestaltung der Schaufelreihengruppe ist es erfindungsgemäß vorgesehen, dass jede Mitgliedschaufelreihe zur Strömungsumlenkung beiträgt und dementsprechend innerhalb wenigstens eines Teiles der Hauptströmungspfadweite eine Profilwölbung aufweist und somit keine der Mitgliedschaufelreihen den Charakter einer aus rein strukturellen Gründen vorgesehenen Strebe besitzt.

Erfindungsgemäß schafft der Einsatz eines erhöhten Einschnürungsverhältnisses der Stufe und einer optimierten Aufteilung der Einschnürung innerhalb von Schaufelreihengruppen der Stufe die Voraussetzung für den Entwurf einer Strömungsarbeitsmaschine, der den Hybrideinsatz einer sich üblich fortentwickelnden Schaufeltechnologie, insbesondere bei Rotoren, und einer Bauweise mit Schaufelreihengruppe, insbesondere am Stator, beinhaltet. Der erfindungsgemäße Lösungsansatz ist somit völlig neuartig und anders als aus dem Stand der Technik bekannt und schafft eine abgegrenzte Kategorie neuer Strömungsarbeitsmaschinen.

Für ein gegebenes Druckverhältnis einer Strömungsarbeitsmaschine lassen sich unter Beibehaltung oder Verbesserung des Wirkungsgrades das Gewicht und die Kosten um etwa 15 % senken.

Bei Einsatz des Konzeptes im Verdichter eines Flugtriebwerkes mit rund 25.000 Pfund Schub ergibt sich so eine Reduzierung des spezifischen Kraftstoffverbrauchs von bis zu 1 %.

Bezugszeichenliste

1 Gehäuse
2 Rotorwelle/Nabe
3 Maschinenachse

**Patentansprüche**

1. Strömungsarbeitsmaschine mit einem durch eine rotierende Welle (2) und ein Gehäuse (1) gebildeten Hauptströmungspfad, in dem zumindest eine Anordnung rotierender, einen Rotor bildender und dem Fluid Energie zuführender Schaufeln vorgesehen ist und in dem in Hauptströmungsrichtung benachbart zum Rotor eine Anordnung ruhender, einen Stator bildender Schaufeln vorgesehen ist, wobei die Rotorschaufeln an einer rotierenden Welle (2) befestigt sind und zumindest eine der Anordnungen des Rotors und des Stators durch eine Schaufelreihengruppe gebildet wird, wobei die zumindest eine Schaufelreihengruppe aus mehreren in Hauptströmungsrichtung benachbart angeordneten Rotorschaufelreihen oder Statorschaufelreihen selben Typs als Mitgliedsschaufelreihen besteht, wobei der Flächenquerschnittverlauf des Hauptströmungspfades in mindestens einer eine Rotoranordnung und eine Statoranordnung umfassenden Stufe zu einem überhöhten Rotor-Stator-Einschnürungsverhältnis QRS führt, welches folgender Beziehung genügt:

$$[0{,}2 + (KT - 0{,}45)^{0{,}1}] < QRS$$

wobei QRS nach folgender Formel definiert ist:

$$QRS = KR \,/\, KS$$

wobei KT die Gesamtstufeneinschnürung ist. QRS und KT sind wie folgt bestimmt:

$$QRS = KR \,/\, KS \text{ mit } KR = ARI \,/\, ARA$$

und

$$KS = ASI \,/\, ASA$$

$$KT = ARI / ASA$$

wobei ARI, ARA, ASI und ASA sich wie folgt berechnen:

$$ARI = \pi (R_2^2 - R_1^2)$$

$$ARA = \pi (R_4^2 - R_3^2)$$

$$ASI = \pi (R_6^2 - R_5^2)$$

$$ASA = \pi (R_8^2 - R_7^2)$$

wobei in Durchströmungsrichtung der Strömungsarbeitsmaschine

$R_1$ der Radius am radial innersten Punkt (P1) der Vorderkante der am weitesten stromauf befindlichen Schaufelreihe des Rotors,

$R_2$ der Radius am radial äußersten Punkt (P2) der Vorderkante der am weitesten stromauf befindlichen Schaufelreihe des Rotors,

$R_3$ der Radius am radial innersten Punkt (P3) der Hinterkante der am weitesten stromab befindlichen Schaufelreihe des Rotors,

$R_4$ der Radius am radial äußersten Punkt (P4) der Hinterkante der am weitesten stromab befindlichen Schaufelreihe des Rotors,

$R_5$ der Radius am radial innersten Punkt (P5) der Vorderkante der am weitesten stromauf befindlichen Schaufelreihe des Stators,

$R_6$ der Radius am radial äußersten Punkt (P6) der Vorderkante der am weitesten stromauf befindlichen Schaufelreihe des Stators,

$R_7$ der Radius am radial innersten Punkt (P7) der Hinterkante der am weitesten stromab befindlichen Schaufelreihe des Stators, und

$R_8$ der Radius am radial äußersten Punkt (P8) der Hinterkante der am weitesten stromab befindlichen Schaufelreihe des Stators ist.

2. Strömungsarbeitsmaschine nach Anspruch 1, **dadurch gekennzeichnet, dass** das überhöhte Rotor-Stator-Einschnürungsverhältnis QRS durch eine von glatter Linienführung abweichende Formgebung der Kontur der Rotorwelle (2) gebildet wird.

3. Strömungsarbeitsmaschine nach Anspruch 1, **dadurch gekennzeichnet, dass** das überhöhte Rotor-Stator-Einschnürungsverhältnis QRS durch eine von glatter Linienführung abweichende Formgebung der Kontur des Gehäuses (1) gebildet wird.

4. Strömungsarbeitsmaschine nach einem der Ansprüche 1 bis 3, **dadurch gekennzeichnet, dass** das überhöhte Rotor-Stator-Einschnürungsverhältnis QRS durch eine Kombination einer von glatter Linienführung abweichende Formgebung der Kontur der Rotorwelle (2) und der Kontur des Gehäuses (1) gebildet wird.

5. Strömungsarbeitsmaschine nach einem der Ansprüche 1 bis 4, **dadurch gekennzeichnet, dass** der Stator durch eine Schaufelreihengruppe bestehend aus mindestens zwei direkt benachbarten Mitgliedsschaufelreihen gebildet wird, wobei jede Mitgliedschaufelreihe mit ruhenden oder bezüglich des Anstellwinkels verstellbar gelagerten Schaufeln versehen ist.

6. Strömungsarbeitsmaschine nach einem der Ansprüche 1 bis 5, **dadurch gekennzeichnet, dass** der Rotor durch eine einzelne Schaufelreihe rotierender Schaufeln versehen ist.

7. Strömungsarbeitsmaschine nach einem der Ansprüche 1 bis 6, **dadurch gekennzeichnet, dass** stromab einer durch einen Rotor und einen Stator gebildeten Stufe mit überhöhtem Rotor-Stator-Einschnürungsverhältnis QRS eine weitere, direkt benachbarte Stufe vorgesehen ist.

8. Strömungsarbeitsmaschine nach einem der Ansprüche 1 bis 7, **dadurch gekennzeichnet, dass** in mindestens zwei jeweils durch einen Rotor und einen Stator gebildeten Stufen ein überhöhtes Rotor-Stator-Einschnürungsverhältnis QRS vorgesehen ist.

9. Strömungsarbeitsmaschine nach einem der Ansprüche 1 bis 8, **dadurch gekennzeichnet, dass** in mindestens zwei benachbarten jeweils durch einen Rotor und einen Stator gebildeten Stufen ein überhöhtes Rotor-Stator-Einschnürungsverhältnis QRS vorgesehen ist.

10. Strömungsarbeitsmaschine nach einem der Ansprüche 1 bis 9, **dadurch gekennzeichnet, dass** die Schaufelreihengruppe wenigstens einer der Anordnungen des Rotors und Stators einen besonderen Flächenverlauf des Hauptströmungspfades aufweist, wobei die relevanten Flächen mit Hilfe der Eckpunktradien der i=1 bis N Mitgliedschaufelreihen der Schaufelreihengruppe bestimmt werden, wobei:

$R_{M(i)EI}$ der Radius des radial innersten Punktes der Vorderkante der i-ten Mitgliedschaufelreihe,
$R_{M(i)EO}$ der Radius des radial äußersten Punktes der Vorderkante der i-ten Mitgliedschaufelreihe,
$R_{M(i)AI}$ der Radius des radial innersten Punktes der Hinterkante der i-ten Mitgliedschaufelreihe,
$R_{M(i)AO}$ der Radius des radial äußersten Punktes der Hinterkante der i-ten Mitgliedschaufelreihe ist,
wobei sich die Einschnürung KM(i) der Mitgliedschaufelreihe i aus ihrer Eintrittsfläche AM(i)E und Austrittsfläche AM(i)A gemäß

$$KM(i) = AM(i)E \, / \, AM(i)A$$

mit

$$AM(i)E = \pi \, (R_{M(i)EO}{}^2 - R_{M(i)EI}{}^2)$$

$$AM(i)A = \pi \, (R_{M(i)AO}{}^2 - R_{M(i)AI}{}^2)$$

und sich entsprechend die Einschnürung KM(i+1) der Mitgliedschaufelreihe i+1 aus ihrer Eintrittsfläche AM(i+1)E und Austrittsfläche AM(i+1)A gemäß

$$KM(i+1) = AM(i+1)E \, / \, AM(i+1)A$$

mit

$$AM(i+1)E = \pi \, (R_{M(i+1)EO}{}^2 - R_{M(i)EI}{}^2)$$

$$AM(i+1)A = \pi \, (R_{M(i+1)AO}{}^2 - R_{M(i+1)AI}{}^2)$$

berechnet, wobei für wenigstens ein Schaufelreihenpaar, gebildet durch zwei direkt benachbarte Schaufelreihen M(i) und M(i+1) der Schaufelreihengruppe, die Einschnürung der stromauf angeordneten Mitgliedschaufelreihe M(i) und die Einschnürung der stromab angeordnete Mitgliedschaufelreihe M(i+1) der folgenden Beziehung genügen: KM(i) / KM(i+1) > 0,85.

11. Strömungsarbeitsmaschine nach Anspruch 10, **dadurch gekennzeichnet, dass** für wenigstens ein Schaufelreihenpaar, gebildet durch zwei direkt benachbarte Schaufelreihen M(i) und M(i+1) der Schaufelreihengruppe, die Einschnürung der stromauf angeordneten Mitgliedschaufelreihe M(i) und die Einschnürung der stromab angeordnete Mitgliedschaufelreihe M(i+1) der folgenden Beziehung genügen: KM(i) / KM(i+1) > 1,0

12. Strömungsarbeitsmaschine nach einem der Ansprüche 10 und 11, **dadurch gekennzeichnet, dass** für wenigstens ein Schaufelreihenpaar, gebildet durch zwei direkt benachbarte Schaufelreihen M(i) und M(i+1) der Schaufelreihengruppe, die stromauf angeordnete Mitgliedschaufelreihe M(i) eine um höchstens 25% größere Einschnürung aufweist als die stromab angeordnete Mitgliedschaufelreihe M(i+1) entsprechend:

$$KM(i) / KM(i+1) < 1,25$$

13. Strömungsarbeitsmaschine nach einem der Ansprüche 10 bis 12, **dadurch gekennzeichnet, dass** für wenigstens ein Schaufelreihenpaar, gebildet durch zwei direkt benachbarte Schaufelreihen M(i) und M(i+1) der Schaufelreihengruppe, die stromauf angeordnete Mitgliedschaufelreihe M(i) eine um mindestens 2% und höchstens 12% größere Einschnürung als die stromab angeordnete Mitgliedschaufelreihe M(i+1) besitzt, entsprechend:

$$1,02 < KM(i) / KM(i+1) < 1,12$$

# Fig. 1

# Fig. 2

$$P_i = P ( X_i , R_i )$$

$$ARI = \pi ( R_2^2 - R_1^2 )$$

$$ARA = \pi ( R_4^2 - R_3^2 )$$

$$ASI = \pi ( R_6^2 - R_5^2 )$$

$$ASA = \pi ( R_8^2 - R_7^2 )$$

$$KR = ARI / ARA$$

$$KS = ASI / ASA$$

$$KT = ARI / ASA$$

$$QRS = KR / KS$$

$$[0,2+(KT-0,45)^{0,1}] < QRS$$

Rotor-Stator-Einschnürungsverhältnis QRS

Bereich erfindungsgemäßer Strömungsarbeitsmaschinen mit Schaufelreihengruppe

QRS min

Stufengesamteinschnürung KT

# Fig. 3

R          SG          RG          S

Mehrstufige Strömungsarbeitsmaschine
nach dem Stand der Technik

Mehrstufige Strömungsarbeitsmaschine
mit überhöhtem R-S-Einschnürungsverh.

Fig. 4

X

Mehrstufige Strömungsarbeitsmaschine
nach dem Stand der Technik

Mehrstufige Strömungsarbeitsmaschine
mit überhöhtem R-S-Einschnürungsverh.

EP 2 275 647 A2

15

# Fig. 5

R          SG          RG          S

r

x

3

Mehrstufige Strömungsarbeitsmaschine
nach dem Stand der Technik

Mehrstufige Strömungsarbeitsmaschine
mit überhöhtem R-S-Einschnürungsverh.

$P_1$ $P_2$ $P_3$ $P_4$ $P_5$ $P_6$ $P_7$ $P_8$

$P_1$ $P_2$ $P_3$ $P_4$ $P_5$ $P_6$ $P_7$ $P_8$

Fig. 6